Europäisches Patentamt

European Patent Office

Office européen des brevets

(11) Veröffentlichungsnummer: **0 524 480 B1**

(12) **EUROPÄISCHE PATENTSCHRIFT**

(45) Veröffentlichungstag der Patentschrift: **17.05.95**

(51) Int. Cl.6: **C03C 17/25**, C03C 17/42

(21) Anmeldenummer: **92111511.9**

(22) Anmeldetag: **07.07.92**

(54) **Verfahren zum Vergüten von Hohlglaskörpern.**

(30) Priorität: **20.07.91 DE 4124137**

(43) Veröffentlichungstag der Anmeldung:
**27.01.93 Patentblatt 93/04**

(45) Bekanntmachung des Hinweises auf die
Patenterteilung:
**17.05.95 Patentblatt 95/20**

(84) Benannte Vertragsstaaten:
**BE DE ES FR GB IT NL**

(56) Entgegenhaltungen:
**EP-A- 0 235 968**
**EP-A- 0 302 738**
**DE-A- 2 541 710**
**US-A- 3 414 429**

**PATENT ABSTRACTS OF JAPAN vol. 7, no.
91 (C-162)15. April 1983 & JP-A-58020754**

**SOVIET PATENTS ABSTRACTS Week 8448,
16. Januar 1985 Derwent Publications
Ltd.,London, GB; AN 84-299010/48 & SU-A-
1033440**

**CHEMICAL ABSTRACTS, vol. 111, no. 2, 10.
Juli 1989, Columbus, Ohio, US;abstract no.
16204r, Seite 624 ;Spalte L ; & JP-A-63257121**

(73) Patentinhaber: **Th. Goldschmidt AG
Goldschmidtstrasse 100
D-45127 Essen (DE)**

(72) Erfinder: **Giersberg, Joachim
Zur Höhe 18
W-4370 Marl-Sinsen (DE)**
Erfinder: **Gomm, Hartmut
Am Buchholz 2
W-4330 Mülheim 13 (DE)**
Erfinder: **Naumann, Dirk, Dr.
Goethestrasse 14 a
W-3388 Bad Harzburg (DE)**

**Beschreibung**

Die Erfindung betrifft ein Verfahren zum Vergüten von Hohlglaskörpern durch Aufsprühen einer Lösung von Zinnverbindungen in Wasser, Alkohol oder Wasser/Alkohol-Mischungen auf die 500 bis 600 °C heiße äußere Oberfläche von Hohlglaskörpern. Die Erfindung betrifft ferner Mittel zur Durchführung dieses Verfahrens.

Es ist im Prinzip bekannt, daß man dünne Zinnoxidschichten auf Glasoberflächen dadurch aufbringen kann, daß man das erhitzte Glas einer verdampften Zinnverbindung aussetzt. Die Zinnverbindung kann als Dampf oder als feiner Spray, der eine gelöste Zinnverbindung enthält, aufgebracht werden.

So ist aus der US-PS 3 414 429 ein Verfahren zum Aufbringen von Metalloxidschichten auf Glasbehälter bekannt, bei dem man als Zinnverbindungen Zinn(IV)-halogenide, wie zum Beispiel Zinentetrachlorid, verwendet. Diese Verbindungen hydrolysieren aber leicht in Gegenwart von Feuchtigkeitsspuren, wobei stark korrodierende Verbindungen entstehen. Da nur ein kleiner Teil der in die Beschichtungskammer eingebrachten Zinnhalogenide tatsächlich auf der Glasoberfläche niedergeschlagen wird und der nicht verbrauchte Anteil der Zinnhalogenide nicht ohne größeren Aufwand zurückgeführt werden kann, eignen sich die Zinnhalogenide für den Einsatz zur Glasvergütung nur bedingt. Da Zinntetrachlorid bei der Anwendung meist mit zusätzlichem Chlorwasserstoff stabilisiert wird, fallen je Zinnatom mindestens vier Chloratome an, die in Form der Chloride das Abwasser belasten. Überdies zeigt sich, daß wegen der spontanen Zersetzung des Zinntetrachlorids ein ungleichmäßiger ßiger Aufbau der Zinnoxidschicht erfolgen kann, wobei optisch störende Interferenzen auftreten können.

Verwendet man statt des Zinntetrachlorids Zinndichlorid, verringert man zwar theoretisch die Menge des zu entsorgenden Chlorids. Man muß jedoch wegen der hydrolytischen Instabilität der wäßrigen Lösungen des Zinndichlorids diesen Lösungen wieder Chlorwasserstoff zusetzen, wodurch die Chlormenge wieder über den Wert von 1 Sn : 2 Cl steigt. Es bleibt zusätzlich das Problem erhöhter Korrosion der apparativen Teile durch die salzsaure Zinndichloridlösung.

Ferner ist aus der DE-PS 25 41 710 ein Verfahren zum Aufbringen einer Zinn(IV)-oxid-Schicht auf einen Glasbehälter durch Pyrolyse einer verdampften oder feinzerteilten flüssigen Zinnverbindung auf der eine Temperatur zwischen 450 und 600 °C aufweisenden Glasoberfläche bekannt, bei dem als Zinnverbindung ein Monoorganozinntrichlorid der allgemeinen Formel $RSnCl_3$ verwendet wird, worin R für ein Alkylradikal mit 1 bis 8 Kohlenstoffatomen steht. Dabei wird als Monoalkylzinntrichlorid vorzugsweise Butylzinntrichlorid verwendet. Organozinnverbindungen sind jedoch toxische, kennzeichnungspflichtige Produkte, deren Verwendung besonderer Sorgfalt bedarf. Dabei ist im Hinblick auf die Schadstoffemission nachteilig, daß je Zinnatom drei Chloratome frei werden und entsorgt werden müssen.

Aus Chemical Abstracts, Vol. 111, No. 2, 10.07.1989, No. 16204r, Seite 624, ist ein Verfahren zum Vergüten von Glassubstraten bekannt, bei dem eine salzsaure, wäßrige Lösung von Zinnoxalat und Antimonoxalat auf das heiße Substrat aufgesprüht wird. Dabei erhält man einen transparenten, leitfähigen und kratzfesten Überzug. Hierbei wirkt sich nachteilig der Antimongehalt dieser Vergütungslösung aus.

Die mit einer Zinn(IV)-oxid-Schicht versehenen (heißendvergüteten) Glasbehälter können anschließend noch mit einem dünnen Film aus Naturwachs oder einem synthetischen Polymer versehen werden (Kaltendvergütung). Ein solcher Belag ist üblicherweise durchsichtig und macht den Glasbehälter gegenüber Kratzen und Abrieb noch beständiger, auch wenn dieser mit alkalischen Reinigungsmitteln in Berührung kommt.

Die vorliegende Erfindung befaßt sich mit diesem technischen Problem der Beschichtung der äußeren Oberfläche von Hohlglaskörpern, wobei ein besonderer Aspekt der vorliegenden Erfindung darin liegt, Lösungen von Zinnverbindungen bereitzustellen, die leicht zugänglich, lagerstabil und nicht oder nur in geringem Maße toxisch sind. Dabei wird bei der thermischen Zersetzung dieser Verbindungen auf heißen Glasoberflächen die Bildung gleichmäßiger Zinnoxidschichten, auf denen die Kaltendvergütungsmittel (Wachse, Polyolefine oder dgl.) gut haften, angestrebt.

Ein Gegenstand der vorliegenden Erfindung, mit dem das vorstehend dargestellte technische Problem gelöst werden soll, ist deshalb ein Verfahren zum Vergüten von Hohlglaskörpern durch Aufsprühen einer Lösung von Zinnverbindungen in Wasser, Alkohol oder Wasser/Alkohol-Mischungen auf die 500 bis 600 °C heiße äußere Oberfläche von Hohlglaskörpern, mit dem Kennzeichen, daß man eine Lösung aufsprüht, welche 86 bis 1290 g/l einer Verbindung der allgemeinen Formel $(HO)_xSn(C_2O_4)_y$, in der x einen Wert von 0,2 bis 3,8, y einen Wert von 1,9 bis 0,1 hat und $(2y + x) = 4$ ist, enthält.

Vorzugsweise hat der Index x einen Wert von 1,5 bis 3, der Index y einen Wert von 0,5 bis 1,25.

Wäßrige Lösungen von $(HO)_xSn(C_2O_4)_y$ lassen sich leicht in hohen Konzentrationen durch vorzugsweise elektrolytische Oxidation von metallischem Zinn in oxalsauren Lösungen herstellen. Die Lösungen sind hydrolysestabil. Es bilden sich auch bei längerem Stehen keine Niederschläge. Eingedickte, hochkonzentrierte Lösungen lassen sich ohne weiteres wieder auf Gebrauchskonzentration verdünnen. Die Lösungen sind frei von an Zinn gebundenem Chlor.

Bei dem erfindungsgemäßen Verfahren werden auf den Glasoberflächen gleichmäßige Zinnoxidschichten einer Schichtdicke von etwa 10 bis 30 nm erhalten. Bei einer anschließenden Kaltendvergütung zeigt sich, daß die hierbei aufgebrachten Wachs- oder Polyolefinschichten gut haften und einer größeren Anzahl von Waschcyclen widerstehen, als dies nach dem bisherigen Stand der Technik möglich war.

Eine weitere Ausgestaltung des erfindungsgemäßen Verfahrens besteht darin, daß man eine Lösung aufsprüht, welche zusätzlich 0,01 bis 0,5 Mol Oxalsäure je Mol $(HO)_xSn(C_2O_4)_y$ enthält. Dies ist insbesondere dann von Vorteil, wenn man Verbindungen der Formel $(HO)_xSn(C_2O_4)_y$ verwendet, deren y-Wert niedrig ist und im Bereich von etwa 0,1 bis 0,5 liegt. Durch den Zusatz der Oxalsäure wird die Ausbildung besonders gleichmäßiger Zinnoxidschichten noch weiter gefördert und die Haftung der Schichten auf dem Untergrund noch verbessert.

Eine weitere Verbesserung der Ausbildung der Zinnoxidschicht ist möglich, wenn man eine Lösung aufsprüht, welche zusätzlich 0,01 bis 0,5 Mol HCl je Mol Zinnsalz enthält. Durch diesen geringen Zusatz an HCl werden die Abwasser- bzw. Emissionsprobleme noch in Grenzen gehalten, jedoch deutlich höhere Schichtdicken an $SnO_2$ erzielt.

Dabei ist es von besonderem Vorteil, wenn man eine Lösung aufsprüht, bei der bis zu 49,9 Mol-% der Verbindung $(HO)_xSn(C_2O_4)_y$ durch äquimolare Mengen der Verbindung $(OH)_2SnCl_2$ ersetzt sind. Bei dieser besonders bevorzugten Ausführungsform des erfindungsgemäßen Verfahrens erzielt man äußerst gleichmäßige Zinnoxidschichten einer Dicke von bis zu 100 nm, wobei die verwendeten Lösungen hydrolysestabil sind und auch bei längerem Stehen keine Abscheidungen zeigen.

Das gemäß dieser Ausgestaltungsform des erfindungsgemäßen Verfahrens eingesetzte Zinnoxalat der Formel $(HO)_xSn(C_2O_4)_y$ kann wie das Zinnoxydichlorid vorzugsweise durch elektrolytische Oxidation von metallischem Zinn in oxalsauren wäßrigen Lösungen hergestellt werden.

Ein weiterer Gegenstand der Erfindung sind die Mittel zur Durchführung des erfindungsgemäßen Verfahrens. Dabei ist ein solches Mittel dadurch gekennzeichnet, daß es aus einer wäßrigen Lösung besteht, welche die Verbindung $(HO)_xSn(C_2O_4)_y$, in der x einen Wert von 0,2 bis 3,8, y einen Wert von 1,9 bis 0,1 hat und $(2y+x) = 4$ ist, in einer solchen Menge enthält, daß der Gehalt an Sn in der Lösung 0,45 bis 4,5 Mol/l beträgt (dies entspricht einer Konzentration von 86 bis 1290 g/l $(HO)_xSn(C_2O_4)_y$), wobei bis zu 49,9 Mol-% der Verbindung $(HO)_xSn(C_2O_4)_y$ durch äquimolare Mengen der Verbindung $(OH)_2SnCl_2$ ersetzt sind, wobei dann vorzugsweise das molare Verhältnis von Sn : Cl angenähert gleich 1 ist.

Der Lösung kann ferner Oxalsäure in einer solchen Menge zugegeben werden, daß die Lösung zusätzlich 0,01 bis 0,5 Mol Oxalsäure je Mol $(HO)_xSn(C_2O_4)_y$ enthält. Der Zusatz von Oxalsäure ist insbesondere dann zu empfehlen, wenn der Index y in der Verbindung $(HO)_xSn(C_2O_4)_y$ im unteren Bereich von 0,1 bis etwa 0,5 liegt.

Ein weiteres bevorzugtes Mittel enthält zusätzlich 0,01 bis 0,5 Mol HCl je Mol $(HO)_xSn(C_2O_4)_y$. Ähnlich wie bei dem Zusatz von $(OH)_2SnCl_2$ wird auch durch den Zusatz von HCl der gleichmäßige Aufbau der Zinnoxidschicht begünstigt.

Beispiele erfindungsgemäßer Mittel sind Lösungen folgender Zusammensetzung:

| Lösung | $(HO)_xSn(C_2O_4)_y$ | | | Oxalsäure g/l | $(OH)_2SnCl_2$ g/l | HCl g/l |
|---|---|---|---|---|---|---|
| | x = | y = | g/l | | | |
| 1 | 2 | 1 | 340 | - | - | - |
| 2 | 3,2 | 0,4 | 980 | - | - | - |
| 3 | 2 | 1 | 820 | 60 | - | - |
| 4 | 2 | 1 | 550 | 93 | - | - |
| 5 | 3,2 | 0,4 | 490 | - | 226 | - |
| 6 | 3,2 | 0,4 | 490 | 50 | 226 | - |
| 7 | 2 | 1 | 334 | - | - | 10 |

Das erfindungsgemäße Verfahren soll durch die folgenden Beispiele weiter erläutert werden. Dabei wird zunächst die Beschichtung der äußeren Oberfläche von Flaschen gezeigt und die erhaltenen Beschichtungen auf Schichtdicke und Gleichmäßigkeit untersucht. Anschließend werden die beschichteten Flaschen kaltendvergütet, und es wird die Waschbeständigkeit der Kaltendbeschichtungen bestimmt.

3

## Verfahrensbeschreibung

Nicht beschichtete 250-ml-Weißglasflaschen werden in einem Muffelofen auf 560°C erwärmt. Nach Entnahme der Flasche aus dem Temperierofen wird diese aus ca. 55 cm Entfernung mit der Versuchslösung besprüht. Die Flasche wird hierbei am Flaschenhals gehalten und führt eine Rotationsbewegung von 60 U/Min. aus.

Die Sprühdauer beträgt ca. 4 Sek. Die applizierte Vergütungsmittelmenge beträgt jeweils 4 ml. Die zu applizierende Lösung wird mit einer Sprühpistole (Preßluft = 3,5 bar) versprüht.

Nach der Beschichtung werden die Flaschen sofort in den 560°C warmen Muffelofen zurückgestellt und innerhalb von 12 Std. kontinuierlich auf Normaltemperatur abgekühlt.

## Bestimmung der Schichtdicken

Die Bestimmung der Zinn(IV)-oxid-Auflagen erfolgt mit einem HOT END COATING METER der Firma AGR. Bei diesem Meßverfahren handelt es sich um eine Infrarotreflektionsmessung. Die Messung wird vom Flaschenboden aus in 1, 1,5, 2 und 3 Zoll Höhe durchgeführt. Das Meßgerät tastet in jeder Höhe den gesamten Flaschenumfang ab und führt pro Grad eine Messung durch (360 Messungen/Umfang).

## Kaltendvergütung

Zur Bestimmung der Haftung von Kaltendvergütungsmitteln werden die vergüteten Flaschen mit einer 1 : 40 verdünnten Lösung eines Kaltendvergütungsmittels auf Basis einer Polyethylenwachsemulsion (im Handel erhältlich unter der Bezeichnung TEGOGLAS-RP-40) besprüht. Hierzu werden die Flaschen auf 120°C erwärmt und auf einen sich mit 30 U/Min. drehenden Teller gesetzt. Mittels einer Sprühpistole (3,5 bar) werden 2 ml der Kaltendvergütungslösung appliziert.

## Bestimmung der Kratzfestigkeit

Zwei identische, vergütete Glasflaschen werden 90° versetzt zueinander in einer Halterung befestigt und mit einem Druck von 5,5 bar auf einer Reibstrecke von 10 cm gegeneinander gerieben. Die Anzahl der Hübe bis zur akustischen und optischen Wahrnehmung von Kratzgeräuschen bzw. Kratzern ist ein Maß für den Kratzschutz der Kaltendvergütungslösung. Die zu testenden Flaschen werden sowohl im trockenen als auch im feuchten Zustand auf ihre Kratzfestigkeit geprüft.

## Waschlaugenstabilität

Die Beständigkeit der Beschichtungen wird in einem für diese Zwecke modifizierten Waschautomaten (Miele-Desinfektor G 7736) durchgeführt.

Hierzu werden die Flaschen 10 Min. mit 2 %iger Natronlauge bei 85°C gespült.

## Heißendvergütung

| Lösung | Schichtdicken/CTU[1] Meßzone/Zoll | | | |
|--------|------|------|------|------|
|        | 1    | 1,5  | 2    | 3    |
| 1      | 29   | 22   | 33   | 23   |
| 2      | 29   | 30   | 31   | 29   |
| 3      | 41   | 39   | 39   | 40   |
| 4      | 33   | 32   | 29   | 23   |
| 5      | 48   | 39   | 38   | 41   |
| 6      | 53   | 84   | 55   | 67   |
| 7      | 22   | 29   | 30   | 26   |

[1] = 1 CTU = 0,3 nm

4

Kaltendvergütung

Alle applizierten Versuchslösungen weisen eine exzellente Primerwirkung für das angewandte Kaltendvergütungsmittel auf. Die Kratzfestigkeit der nachfolgenden Kaltendvergütungsbeschichtung beträgt bei chloridfreien Heißendvergütungslösungen > 5 Hübe, während die Prüfung der chloridhaltigen Varianten bei 10 Hüben noch keine negativen Effekte zeigt.

Nach zwei Natronlaugewaschcyclen wird die Kratzfestigkeit um weniger als 10 %, bezogen auf die Anzahl der Ausgangshübe, minimiert.

**Patentansprüche**

1. Verfahren zum Vergüten von Hohlglaskörpern durch Aufsprühen einer Lösung von Zinnverbindungen in Wasser, Alkohol oder Wasser/Alkohol-Mischungen auf die 500 bis 600°C heiße äußere Oberfläche von Hohlglaskörpern, dadurch gekennzeichnet, daß man eine Lösung aufsprüht, welche 86 bis 1290 g/l einer Verbindung der allgemeinen Formel $(HO)_xSn(C_2O_4)_y$, in der x einen Wert von 0,2 bis 3,8, y einen Wert von 1,9 bis 0,1 hat und $(2y + x) = 4$ ist, enthält.

2. Verfahren nach Anspruch 1, dadurch gekennzeichnet, daß man eine Lösung aufsprüht, welche zusätzlich 0,01 bis 0,5 Mol Oxalsäure je Mol $(HO)_xSn(C_2O_4)_y$ enthält.

3. Verfahren nach Anspruch 1, dadurch gekennzeichnet, daß man eine Lösung aufsprüht, welche zusätzlich 0,01 bis 0,5 Mol HCl je Mol Zinnsalz enthält.

4. Verfahren nach einem oder mehreren der vorhergehenden Ansprüche, dadurch abgewandt, daß man eine Lösung aufsprüht, bei der bis zu 49,9 Mol-% der Verbindung $(HO)_xSn(C_2O_4)_y$ durch äquimolare Mengen der Verbindung $(OH)_2SnCl_2$ ersetzt sind.

5. Mittel zur Durchführung des Verfahrens nach Anspruch 4 in Form einer Lösung von Zinnverbindungen in Wasser, Alkohol oder Wasser/Alkohol-Mischungen, dadurch gekennzeichnet, daß die Lösung die Verbindung $(HO)_xSn(C_2O_4)_y$ und die Verbindung $(OH)_2SnCl_2$, letztere in einer Menge von bis zu 49,9 Mol-%, enthält.

6. Mittel nach Anspruch 5, dadurch gekennzeichnet, daß das molare Verhältnis von Sn : Cl angenähert gleich 1 ist.

7. Mittel nach einem oder mehreren der Ansprüche 5 und 6, dadurch gekennzeichnet, daß es zusätzlich 0,01 bis 0,5 Mol Oxalsäure je Mol $(HO)_xSn(C_2O_4)_y$ enthält.

8. Mittel nach einem oder mehreren der Ansprüche 5 und 6, dadurch gekennzeichnet, daß es zusätzlich 0,01 bis 0,5 Mol HCl je Mol $(HO)_xSn(C_2O_4)_y$ enthält.

**Claims**

1. Process for coating hollow glass articles by spraying a solution of tin compounds in water, alcohol or water/alcohol mixtures onto the hot outer surface of hollow glass articles which is at from 500 to 600°C, characterized in that the spray solution contains from 86 to 1290 g/l of a compound of the general formula $(HO)_xSn(C_2O_4)_y$, in which x is a value of from 0.2 to 3.8, y is a value of from 1.9 to 0.1, and $(2y + x) = 4$.

2. Process according to Claim 1, characterized in that the spray solution additionally contains from 0.01 to 0.5 mol of oxalic acid per mole of $(HO)_xSn(C_2O_4)_y$.

3. Process according to Claim 1, characterized in that the spray solution additionally contains from 0.01 to 0.5 mol of HCl per mole of tin salt.

4. Process according to one or more of the preceding claims, modified by replacement of up to 49.9 mol% of the compound $(HO)_xSn(C_2O_4)_y$ in the spray solution by equimolar amounts of the compound $(OH)_2SnCl_2$.

5. Composition for carrying out the process of Claim 4 in the form of a solution of tin compounds in water, alcohol or water/alcohol mixtures, characterized in that the solution contains the compound $(HO)_x Sn(C_2O_4)_y$ and the compound $(OH)_2 SnCl_2$, the latter in an amount of up to 49.9 mol%.

6. Composition according to Claim 5, characterized in that the molar Sn:Cl ratio is approximately 1.

7. Composition according to one or more of Claims 5 and 6, characterized in that it additionally contains from 0.01 to 0.5 mol of oxalic acid per mole of $(HO)_x Sn(C_2O_4)_y$.

8. Composition according to one or more of Claims 5 and 6, characterized in that it additionally contains from 0.01 to 0.5 mol of HCl per mole of $(HO)_x Sn(C_2O_4)_y$.

**Revendications**

1. Procédé de traitement superficiel d'articles creux en verre par pulvérisation d'une solution de composés de l'étain dans de l'eau, un alcool ou des mélanges d'eau et d'alcool, sur la surface extérieure, chauffée à 500 à 600°C, d'articles creux en verre, caractérisé en ce qu'on pulvérise une solution qui contient 86 à 1 290 g/l d'un composé répondant à la formule générale $(HO)_x Sn(C_2O_4)_y$, dans laquelle x vaut de 0,2 à 3,8, y vaut de 1,9 à 0,1, et $(2y + x) = 4$.

2. Procédé selon la revendication 1, caractérisé en ce qu'on pulvérise une solution qui contient, en outre, 0,01 à 0,5 mole d'acide oxalique par mole de $(HO)_x Sn(C_2O_4)_y$.

3. Procédé selon la revendication 1, caractérisé en ce qu'on pulvérise une solution qui contient, en outre, 0,01 à 0,5 mole de HCl par mole de sel d'étain.

4. Procédé selon l'une ou plusieurs des revendications précédentes, modifié en ce qu'on pulvérise une solution dans laquelle jusqu'à 49,9 % en moles du composé $(HO)_x Sn(C_2O_4)_y$ sont remplacés par des quantités équimolaires du composé $(OH)_2 SnCl_2$.

5. Agent pour la mise en oeuvre du procédé selon la revendication 4, caractérisé en ce que la solution, qui est sous la forme d'une solution de composés de l'étain dans de l'eau, un alcool ou des mélanges d'eau et d'alcool, contient le composé $(HO)_x Sn(C_2O_4)_y$ et le composé $(OH)_2 SnCl_2$, ce dernier étant présent en une quantité allant jusqu'à 49,9 % en moles.

6. Agent selon la revendication 5, caractérisé en ce que le rapport molaire de Sn:Cl est approximativement égal à 1.

7. Agent selon l'une ou plusieurs des revendications 5 et 6, caractérisé en ce qu'il contient, en outre, 0,01 à 0,5 mole d'acide oxalique par mole de $(HO)_x Sn(C_2O_4)_y$.

8. Agent selon l'une ou plusieurs des revendications 5 et 6, caractérisé en ce qu'il contient, en outre, 0,01 à 0,5 mole de HCl par mole de $(HO)_x Sn(C_2O_4)_y$.